# EUROPÄISCHE PATENTSCHRIFT

(11) **EP 1 597 198 B1**
(45) Veröffentlichungstag und Bekanntmachung des Hinweises auf die Patenterteilung: **29.04.2009**
(21) Anmeldenummer: 04710382.5
(22) Anmeldetag: 12.02.2004
(51) Int. Cl.: C01B 13/14, C01B 33/149, B41M 5/00

(54) **VERFAHREN ZUR STABILISIERUNG VON DISPERSIONEN**
METHOD FOR STABILISING DISPERSIONS
PROC D DE STABILISATION DE DISPERSIONS

(30) Priorität: 20.02.2003 DE 10307249; 17.03.2003 DE 10311722; 05.06.2003 DE 10325609
(43) Veröffentlichungstag der Anmeldung: 23.11.2005
(73) Patentinhaber: Wacker Chemie AG, 81737 München (DE)
(72) Erfinder: BARTHEL, Herbert, 84547 Emmerting (DE); LOSKOT, Stephan, 84556 Kastl (DE); HEINEMANN, Mario, 84489 Burghausen (DE); VÖLKEL, Ute, 84489 Burghausen (DE)
(74) Vertreter: Gössmann, Christoph Tassilo
(86) Internationale Anmeldenummer: PCT/EP2004/001327
(87) Internationale Veröffentlichungsnummer: WO 2004/074176

(56) Entgegenhaltungen:
- US-A- 2 892 797
- US-A- 3 719 607
- US-A- 5 603 805

## Beschreibung

Die Erfindung betrifft ein Verfahren zur Stabilisierung von Dispersionen, eine Dispersion, eine Kieselsäure sowie ein Verfahren zur Herstellung einer solchen.

Bekannt ist aus der Schrift der Cabot EP 1 124 693 A1 die Stabilisierung von wässrigen Kieselsäuredispersionen mit Aluminiumsalzen für den Einsatz zur Beschichtung von Druckmedien (Papier).
Dies hat den Nachteil, dass in Gegenwart und unter Einfluß von Aluminium unerwünschte Farbänderungen der Druckfarben auftreten.

In US 2,630,410 wird ein Kieselsol, das mit Borsäure oder Alkaliboraten gegen Vergelen stabilisiert wird, beschrieben.

Andere bekannte Verfahren zur Stabilisierung von KIESELSÄUREDispersionen sind der Zusatz von Alkali und Einstellen eines hohen pH-Wertes mit KOH oder NaOH.
Dies hat den Nachteil, dass Schäden am Papier auftreten.

Aufgabe der Erfindung ist es, die Nachteile des Standes der Technik zu überwinden.

Überraschenderweise wurde nun gefunden, dass bei Einsatz einer Bor-haltigen Kieselsäure sich Kieselsäuredispersionen mit sehr hohen Feststoffgehalten herstellen lassen, bei ausgezeichneter Stabilität gegen Vergelen und Sedimentation auch nach langer Lagerzeit.

Gegenstand der Erfindung ist ein Verfahren zur Stabilisierung von Dispersionen, **dadurch gekennzeichnet, dass** Kieselsäure eingemischt wird, die Bor enthält.

Die Dispersionen können vorzugsweise Dispersionen aus Metalloxiden, wie Siliciumdioxide, wie Aluminiumoxide, wie Titandioxide, wie Zirkon(IV)oxide, wie Cer(IV)oxide, wie Zinkoxide sein.

Im Verfahren zur Stabilisierung von Dispersionen wird Bor vorzugsweise in einer Menge von 0,00001 Gew.% bis 8 Gew.% Bor, bevorzugt 0,0001 Gew.% bis 8 Gew.% Bor, bevorzugt 0,001 - 5 Gew.% Bor, besonders bevorzugt 0,1 - 5 Gew.% Bor eingesetzt, wobei Bor immer als reines Bor in der Bor-haltigen Dispersion berechnet wird, bezogen auf die gesamte Bor-haltige Dispersion.

Im Verfahren zur Stabilisierung von Dispersionen wird Bor vorzugsweise in einer Menge von 0,0001 Gew.% bis 12 Gew.% Bor, bevorzugt 0,001 - 10 Gew.% Bor, besonders bevorzugt 0,1 - 5 Gew.% Bor eingesetzt, wobei Bor immer als reines Bor in der Bor-haltigen Kieselsäure berechnet wird, bezogen auf die gesamte Bor-haltige Kieselsäure.

Ein weiterer Gegenstand sind Metalloxid enthaltende Dispersionen, die Bor enthalten.

Die erfindungsgemäße Dispersion enthält vorzugsweise die oben genannten Metalloxide.

Bei der Herstellung der erfindungsgemäßen Dispersionen, die Bor enthalten, wird Bor als Borverbindung in eine Flüssigkeit eingemischt.
Bei der Herstellung der erfindungsgemäßen Dispersionen, die Bor-haltige Kieselsäure enthalten, wird die Bor-haltige Kieselsäure in eine Flüssigkeit eingemischt.
Flüssigkeiten sind bevorzugt solche, die niederviskos sind, bevorzugt solche mit Viskositäten kleiner 100 mPas bei 25°C, wie vorzugsweise Wasser, und andere polare protische flüssige Medien, wie Alkohole, wie Methanol, Ethanol, Isopropanol, Di-und Polyolen, wie Ethylenglykol, Propylenglykol oder Glycerin, polare nicht protische flüssige Medien, wie Ether, wie Tetrahydrofuran, Ketone wie Aceton, Isobutylketon, Estern, wie Essigsäureethylester, Amide wie Dimethylformamid, oder Sulfoxiden wie Dimethylsulfoxid, sowie unpolare flüssige Medien wie Alkane, wie Cyclohexan, oder Aromate, wie Toluol. Besonders bevorzugt ist Wasser.

Die Bor-Verbindung kann zur Herstellung der erfindungsgemäßen Dispersionen in die Flüssigkeit zugegeben werden und wird durch Benetzung verteilt oder durch Schütteln, wie mit einem Taumelmischer oder einem High Speed Mixer oder durch Rühren. Bei geringen Kieselsäurekonzentrationen unter 10 Gew.% reicht im allgemeinen einfaches Rühren zur Einarbeitung der Kieselsäure in die Flüssigkeit. Bevorzugt ist das Einarbeiten und Dispergieren der Kieselsäure in die Flüssigkeit bei sehr hohem Schergefälle. Hierfür sind vorzugsweise schnelllaufende Rührer, schnelllaufende Dissolver, z.B. mit Umlaufgeschwindigkeiten von 1-50 m/s, schnelllaufende Rotor-Stator Systeme, Sonolatoren, Scherspalte, Düsen, Kugelmühlen geeignet.
Dies kann in diskontinuierlichen und in kontinuierlichen Verfahren erfolgen.
Besonders geeignet sind Systeme, die zunächst mit effektiven Rührorganen die Benetzung und Einarbeitung der Kieselsäure in die Flüssigkeit erzielen, z.B. in einem geschlossenen Behältnis oder Kessel, und in einem zweiten Schritt die Kieselsäure bei sehr hohem Schergefälle dispergieren. Dies kann durch ein Dispergiersystem in dem ersten Behältnis geschehen oder durch Umpumpen in einer externen Rohrleitung, die ein Dispergiersystem enthält, wobei die Dispersion aus dem Behältnis, unter bevorzugt geschlossener Rückführung, durch das Dispersgiersystem in das Behältnis zurückgeführt wird. Durch eine teilweise Rückführung und teilweise kontinierliche Entnahme kann dieser Prozess bevorzugt kontinuierlich gestaltet werden.

Besonders geeignet zur Dispergierung der Kieselsäure in der erfindungsgemäßen Dispersion ist der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschalispitzen, geschehen oder in Durchflußsystemen, die als gegebenenfalls durch eine Rohrleitung oder Rohrwand abgetrennte Systeme einen oder mehrere Ultraschallgeber enthalten können. Ultraschalldispergierung kann kontinuierlich oder diskontinuierlich erfolgen.

Die Bor-haltige Kieselsäure kann zur Herstellung der erfindungsgemäßen Dispersionen in die Flüssigkeit zugegeben werden und wird durch Benetzung verteilt oder durch Schütteln, z.B mit einem Taumelmischer oder mit einem High Speed Mixer oder durch Rühren. Bei geringen Kieselsäurekonzentrationen unter 10 Gew.% reicht im allgemeinen einfaches Rühren. Bevorzugt ist das Einarbeiten und Dispergieren der Bor-haltigen Kieselsäure bei sehr hohem Schergefälle. Hierfür sind vorzugsweise schnelllaufende Rührer, schnelllaufende Dissolver, z.B. mit Umlaufgeschwindigkeiten von 1-50m/s, schnelllaufende Rotor-Stator Systeme, Sonolatoren, Scherspalte, Düsen, Kugelmühlen geeignet.
Dies kann in diskontinuierlichen und in kontinuierlichen Verfahren erfolgen.
Besonders geeignet sind Systeme, die zunächst mit effektiven Rührorganen die Benetzung und Einarbeitung der Kieselsäure in die Flüssigkeit erzielen, z.B. in einem geschlossenen Behältnis oder Kessel, und in einem zweiten Schritt die Kieselsäure bei sehr hohem Schergefälle dispergieren. Dies kann durch ein Dispergiersystem in dem ersten Behältnis geschehen oder durch Umpumpen in einer externen Rohrleitung, die ein Dispergiersystem enthält, wobei die Dispersion aus dem Behältnis, unter bevorzugt geschlossener Rückführung, durch das Dispergiersystem in das Behältnis zurückgeführt wird. Durch eine teilweise Rückführung und teilweise kontinierliche Entnahme kann dieser Prozess bevorzugt kontinuierlich gestaltet werden.
Insbesondere geeignet ist zur Dispergierung der Kieselsäure in der erfindungsgemäßen Dispersion der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen geschehen oder in Durchflußsystemen, die als gegebenenfalls durch eine Rohrleitung oder Rohrwand abgetrennten Systeme einen oder mehrere Ultraschallgeber enthalten können. Ultraschalldispergierung kann kontinuierlich oder diskontinuierlich erfolgen.
Bei der erfindungsgemäßen Dispersion, die Metalloxid enthält, ist Bor vorzugsweise in einer Menge von 0,00001 Gew.% bis 8 Gew.% Bor, bevorzugt von 0,0001 Gew.% bis 8 Gew.% Bor, bevorzugt 0,001 bis 5 Gew.%, besonders bevorzugt 0,1 - 5 Gew%, im besonderen bevorzugt 0,5 - 5 Gew.% Bor enthalten, wobei Bor immer als reines Bor in der Bor-haltigen Dispersion berechnet wird, bezogen auf die gesamte Bor-haltige Dispersion.

Bei der erfindungsgemäßen Dispersion ist Bor in der Bor-haltigen Kieselsäure vorzugsweise in einer Menge von 0,0001 Gew.% bis 12 Gew.% Bor, bevorzugt 0,001 bis 10 Gew.%, besonders bevorzugt 0,1 - 5 Gew%, im besonderen bevorzugt 0,5 - 5 Gew.% Bor enthalten, wobei Bor immer als reines Bor in der Bor-haltigen Kieselsäure berechnet wird, bezogen auf die gesamte Bor-haltige Kieselsäure.

Beispiele für erfindungsgemäße bevorzugte wässrige Dispersionen sind vorzugsweise solche, die 0,01-5 Gew% Bor als Bor-Verbindung enthalten und die 70 Gew.% einer pyrogenen KIESELSÄURE mit BET = 25-100 m²/g, oder die 50 Gew.% einer pyrogenen KIESELSÄURE mit BET = 100-200 m²/g, oder die 1-40 Gew.% einer pyrogenen KIESELSÄURE mit BET = 200-450 m²/g, gegebenenfalls andere Kieselsäuren und gegebenenfalls andere feinteilige und kolloidale Feststoffe enthalten, sowie Wasser und gegebenenfalls andere Zuschlagsstoffe, wie z.B. Mineralsäuren, wie Phosphorsäure, oder organische Säuren, wie Apfelsäure oder Propionsäure, oder anorganische Basen, wie Kaliumhydroxid oder Natriumhydroxid oder Ammoniak, oder organische Basen, wie Triethanolamin, oder Polymere, wie Polyethylenglykol, Polypropylenglykol, oder Tenside, wie anionische Tenside, wie Dodecylsulfonsäure, oder kationische Tenside, wie Cetylpyridinium Chlorid, oder neutrale Tenside, wie Triton X100, enthalten.

Beispiele für erfindungsgemäße Borverbindung sind alle in dem erfindungsgemäßen Lösemittel löslichen, unzersetzt oder sich zersetzend lösliche, oder in Wasser lösliche, unzersetzt oder sich zersetzend lösliche, wie hydrolysierende Borverbindungen. Es können solche eingesetzt werden, die erfindungsgemäß zur Herstellung Bor-haltiger Kieselsäure eingesetzt werden. Es können wasserlösliche Borverbindungen eingesetzt werden wie wasserlösliche Boroxide, wie B₂O₃, wasserlösliche Borsäure, wie B(OH)₃ oder HB(OH)₄, HBO₂, Salze der Borsäure, wie Natriumsalze, wie Natriummetaborat, wie NaBO₃ oder Borax, Na₂B₄O₇ · 10 H₂O.

Weitere Beispiele für erfindungsgemäße wässrige Dispersionen sind vorzugsweise solche, die 0,1-70 Gew.% einer Bor-haltigen KIESELSÄURE mit BET = 25-100 m²/g, gegebenenfalls anderen Kieselsäuren und gegebenenfalls andere feinteilige und kolloidale Feststoffe enthalten, sowie Wasser und gegebenenfalls andere Zuschlagsstoffe, wie z.B. Mineralsäuren, wie Phosphorsäure, oder organische Säuren, wie Apfelsäure oder Propionsäure, oder anorganische Basen, wie Kaliumhydroxid oder Natriumhydroxid oder Ammoniak, oder organische Basen, wie Triethanolamin, oder Polymere, wie Polyethylenglykol, Polypropylenglykol, oder Tenside, wie anionische Tenside, wie Dodecylsulfonsäure, oder kationische Tenside, wie Cetylpyridinium Chlorid, oder neutrale Tenside, wie Triton X100, enthalten.

Weitere Beispiele für erfindungsgemäße wässrige Dispersionen sind vorzugsweise solche, die 0,1-50 Gew.% einer Bor-haltigen KIESELSÄURE mit BET = 100-200 m²/g, gegebenenfalls anderen Kieselsäuren und gegebenenfalls andere feinteilige und kolloidale Feststoffe enthalten, sowie Wasser und gegebenenfalls andere Zuschlagsstoffe, wie z.B. Mineralsäuren, wie Phosphorsäure, oder organische Säuren, wie Apfelsäure oder Propionsäure, oder anorganische Basen, wie Kaliumhydroxid oder Natriumhydroxid oder Ammoniak, oder organisch Basen, wie Triethanolamin, oder Polymere, wie Polyethylenglykol, Polypropylenglykol, oder Tenside, wie anionische Tenside, wie Dodecylsulfonsäure, oder kationische Tenside, wie Cetylpyridinium Chlorid, oder neutrale Tenside, wie Triton X100, enthalten.

Weitere Beispiele für erfindungsgemäße wässrige Dispersionen sind vorzugsweise solche, die 0,1-40 Gew.% einer Bor-haltigen KIESELSÄURE mit BET = 200-450 m²/g, gegebenenfalls andere Kieselsäuren und gegebenenfalls andere feinteilige und kolloidale Feststoffe enthalten, sowie Wasser und gegebenenfalls' andere Zuschlagsstoffe, wie z.B. Mineralsäuren, wie Phosphorsäure, oder organische Säuren, wie Apfelsäure oder Propionsäure, oder anorganische Basen, wie Kaliumhydroxid oder Natriumhydroxid oder Ammoniak, oder organische Basen, wie Triethanolamin, oder Polymere, wie Polyethylenglykol, Polypropylenglykol, oder Tenside, wie anionische Tensied, wie Dodecylsulfonsäure, oder kationische Tenside, wie Cetylpyridinium Chlorid, oder neutrale Tenside, wie Triton X100, enthalten.

Außer wässrigen Dispersionen sind auch Dispersionen vorzugsweise in anderen polaren protischen flüssigen Medien, wie Alkoholen, wie Methanol, Ethanol, Isopropanol, Di-und Polyolen, wie Ethylenglykol, Propylenglykol oder Glycerin, polaren nicht protischen flüssigen Medien, wie Ethern, wie Tetrahydrofuran, Ketonen wie Aceton, Isobutylketon, Estern, wie Essigsäureethylester, Amiden wie Dimethylformamid, oder Sulfoxiden wie Dimethylsulfoxid, sowie unpolaren flüssigen Medien wie Alkanen, wie Cyclohexan, oder Aromaten, wie Toluol, möglich.
Bevorzugt ist, aus Gründen der Handhabung und Toxikologie, Wasser als flüssiges Medium geeignet.

Die Bor-haltige Kieselsäure kann grundsätzlich in verschiedenen Verfahren hergestellt werden.

### Verfahren 1

In den bekannten Prozessen zur Herstellung von pyrogener Kieselsäure, die auf einem Flammenprozess bei Temperaturen, z.B. von über 1000°C beruhen, und der Umsetzung eines verdampfbaren Silans, wie zum Beispiel Siliciumtetrachlorid, Hydrogensiliciumtriphlorid, Methylsiliciumtrichlorid, oder Hydrogenmethylsiliciumdichlorid, in einer Flamme beinhalten, z.B. aus der Verbrennung von Wasserstoffgas und Sauerstoffgas, denen auch in substöchiometrischen Mengen niedere Alkane, wie Methan, zugemischt werden können, wird zusätzlich eine oder mehrere verdampfbare Borverbindungen zugegeben, z.B. Bortrichlorid oder Borsäuretrimethylester.

Das Verhältnis Bor, in der verdampfbaren Borverbindung, zu Si, im verdampfbaren Silan, entspricht dabei in der Mischung vorzugsweise einer Menge von 0,0001 Gew.% bis 50 Gew.% Bor, bevorzugt 0,1 - 50 Gew.% Bor, besonders bevorzugt 0,5 - 25 Gew.% Bor, ganz besonders bevorzugt 0,5 - 5 Gew% Bor.

Das Verhältnis Bor in der Bor-haltigen Kieselsäure entspricht dabei vorzugsweise einer Menge von 0,0001 Gew.% bis 12 Gew.% Bor, bevorzugt 0,001 bis 10 Gew.%, besonders bevorzugt 0,1 - 5 Gew%, ganz besonders bevorzugt 0,5 - 2,5 Gew.% Bor, wobei Bor immer als reines Bor in der Bor-haltigen Kieselsäure berechnet wird, bezogen auf die gesamte Bor-haltige Kieselsäure.

Die Zugabe der Borverbindung geschieht dabei vorteilhafterweise in dem Verdampfer, der dem Brenner vorgeschaltet ist; bevorzugt ist eine homogene Vermischung der dem Brenner zugeführten dampfförmigen Komponenten und Gase.

### Verfahren 2

In einer anderen erfindungsgemäßen Ausführung wird dabei die verdampfbare oder flüssige oder in einer Flüssigkeit, bevorzugt Wasser, gelöste Borverbindung in die Flamme der Herstellung der pyrogenen Kieselsäure eingesprüht, verdüst oder als Aerosol, bevorzugt über Atomizer hergestellt, eingebracht.

Das Verhältnis Bor in der Bor-haltigen Kieselsäure entspricht dabei vorzugsweise einer Menge von 0,0001 Gew.% bis 12 Gew.% Bor, bevorzugt 0,001 bis 10 Gew.%, besonders bevorzugt 0,1 - 5 Gew%, ganz besonders bevorzugt 0,5 - 2,5 Gew.% Bor, wobei Bor immer als reines Bor in der Bor-haltigen Kieselsäure berechnet wird, bezogen auf die gesamte Bor-haltige Kieselsäure.

### Verfahren 3

In einer anderen erfindungsgemäßen Ausführung wird ein nach bekannten Verfahren hergestelltes Siliciumdioxid, z.B. ein Kieselsol, ein Kieselgel, eine Diatomeenerde, nicht calciniert oder calciniert, eine nasschemisch hergestellte Kieselsäure, also eine sogenannte gefällte Kieselsäure, oder eine in einem Flammenprozess hergestellte Kieselsäure, eine sogenannte pyrogene Kieselsäure, mit einer oder mehreren Borverbindungen nachbehandelt. Gegebenenfalls können auch noch andere zusätzliche Agenzien zur Oberflächenbehandlung zugesetzt werden, wie Hydrophobiermittel, Silyliermittel, wie Alkylchlorsilan, wie Dimethyldichlorsilan, oder Alkylalkoxysilane, wie Dimethyldimethoxysilan, wie Alkylsilazane, wie Hexamethyldisilazan, oder Alkylpolysiloxane, wie Polydimethylsiloxane mit einer mittleren Kettenlänge von weniger als 100 Kettenglieder, d.h. Monomereinheiten Dimethylsiloxy, und mit reaktiven Endgruppen wie SiOH Gruppen, also beilspielsweise Dimethylsilanol-Endgruppen, oder nichtreaktiven Endgruppen, wie Trimethylsiloxygruppen. Beispiele für Borverbindungen sind kovalente Borverbindungen, wie Borhalogenide, z.B. Bortrichlorid, oder Boralkoholate, wie Borsäuretrimethylester, Borsäuretriethylester, oder in Wasser lösliche Salze des Bors, wie Natriumborate, wie Na₃HO₃ oder NaBO₂ oder Borax. Geeignet sind ferner auch in organischen Lösemitteln lösliche Verbindungen des Bors.

In einer besonderen Ausführung wird als Basis-(Ausgangs-)-Produkt der Oberflächenbehandlung mit einer, Borverbindung eine hydrophile pyrogene Kieselsäure eingesetzt, die unter wasserfreien Bedingungen hergestellt wird. Unter wasserfrei ist hierbei zu verstehen, dass weder im hydrothermalen Herstellungs-Prozess noch in den weiteren Schritten des Prozesses, wie Abkühlung, Reinigung und Lagerung, bis zum fertigen und gereinigten, verpackten und versandfertigen Produkt kein zusätzliches Wasser in den Prozess zugeführt wird, weder in flüssiger noch in dampfförmiger Form. Es wird dabei jedenfalls nicht mehr als 5 Gew.% Wasser bezogen auf das gesamte Gewicht der Kieselsäure zugegeben, vorzugsweise wird so wenig Wasser wie möglich, besonders bevorzugt überhaupt kein Wasser zugegeben.

Ein weiterer Gegenstand ist ein Verfahren zur Beschichtung von Kieselsäure, hydrophil oder hydrophob oder silyliert, **dadurch gekennzeichnet, dass** die Kieselsäure mit einer oder mehreren flüchtigen, flüssigen oder löslichen Borverbindungen oberflächenbehandelt wird.

Beispielsweise hat die Borverbindung die Formel

R¹ₐBX_{b} (I)

oder

R¹_{c}B(OR²)_{d} (II)

wobei a+b = 3 bzw c+d = 3 ist,
bevorzugt ist b = 3,
bevorzugt ist d = 3,
und
X = ein Halogen ist, bevorzugt Chlor,
R¹ ein gegebenenfalls einfach oder mehrfach ungesättigter, einwertiger, gegebenenfalls halogenierter, Kohlenwasserstoffrest mit 1 bis 18 C-Atomen ist,
und dabei gleich oder verschieden sein kann,
R¹ ist bevorzugt eine Methyl- oder Ethylgruppe, besonders bevorzugt aus Gründen der Verfügbarkeit eine Methylgruppe,
R² ein gegebenenfalls einfach oder mehrfach ungesättigter, einwertiger, gegebenenfalls halogenierter, Kohlenwasserstoffrest mit 1 bis 12 C-Atomen ist,
und dabei gleich oder verschieden sein kann.

Beispiele für R¹ sind Alkylreste wie der Methylrest, der Ethylrest, Propylreste wie der iso- oder der n-Propylrest, Butylreste wie der t- oder n-Butylrest, Pentylreste wie der neo-, die iso- oder der n-Pentylrest(e), Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest, Hexadecylreste wie der n-Hexadecylrest, Octadecylreste wie der n-Octadecylrest, Alkenylreste wie der Vinyl-, der 2-Allyl- oder der 5-Hexenylrest, Arylreste wie der Phenyl-, der Biphenyl oder Naphthenylrest, Alkylarylreste wie Benzyl-, Ethylphenyl-Toluyl- oder die Xylylreste, halogenierte Alkylreste wie der 3-Chlorpropylrest.

Bevorzugte Beispiele für R¹ sind der Methylrest und der Ethylrest, besonders bevorzugt ist der Methylrest.

Beispiele für R² sind Alkylreste wie der Methylrest, der Ethylrest, Propylreste wie der iso- oder der n-Propylrest, Butylreste wie der t- oder n-Butylrest, Pentylreste wie der neo-, die iso- oder der n-Pentylrest(e), Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest.

Bevorzugte Beispiele für R² sind der Methylrest und der Ethylrest, besonders bevorzugt ist der Methylrest.

Besonders bevorzugte Beispiele für Borverbindungen sind Bortrichlorid und Borsäuretrialkylester, wobei Borsäuretrimethylester bevorzugt ist.

Das Verhältnis Bor in der Bor-haltigen Kieselsäure entspricht dabei vorzugsweise einer Menge von 0,0001 Gew.% bis 12 Gew.% Bor, bevorzugt 0,001 bis 10 Gew.%, besonders bevorzugt 0,1 - 5 Gew%, im besonderen bevorzugt 0,5 ∼ 5 Gew.% Bor, wobei Bor immer als reines Bor in der Bor-haltigen Kieselsäure berechnet wird, bezogen auf die gesamte Bor-haltige Kieselsäure.

### Ausgangskieselsäure zu Verfahren 3

Die Ausgangs-Kieselsäure hat vorzugsweise eine mittlere Primärteilchen-Partikelgröße kleiner als 100 nm, bevorzugt mit einer mittleren Primärteilchen-Partikelgröße von 5 bis 50 nm. Diese Primärteilchen existieren nicht isoliert in der Kieselsäure, sondern sind Bestandteile größerer Aggregate und Agglomerate.

Vorzugsweise weist die Kieselsäure eine spezifische Oberfläche von 25 bis 500 m²/g (gemessen nach der BET Methode nach DIN 66131 und 66132) auf.

Die Kieselsäure weist Aggregate (Definition nach DIN 53206) im Bereich von Durchmessern 100 bis 1000 nm auf, wobei die Kieselsäure aus Aggregaten aufgebaute Agglomerate (Definition nach DIN 53206) aufweist, die in Abhängigkeit von der äußeren Scherbelastung (z.B. Meßbedingungen) Größen von 1 bis 500 µm aufweisen.

Vorzugsweise weist die Kieselsäure eine fraktale Dimension der Oberfläche von vorzugsweise kleiner oder gleich 2,3 auf, bevorzugt von kleiner oder gleich 2,1, besonders bevorzugt von 1,95 bis 2,05, wobei die fraktale Dimension der Oberfläche Dₛ hierbei definiert ist als:
Partikel-Oberfläche A ist proportional zum Partikel-Radius R hoch Dₛ.

Vorzugsweise weist die Kieselsäure eine fraktale Dimension der Masse Dₘ von vorzugsweise kleiner oder gleich als 2,8, bevorzugt gleich oder kleiner 2,7, besonders bevorzugt von 2,4 bis 2,6 auf. Die fraktale Dimension der Masse Dₘ ist hierbei definiert als:
Partikel-Masse M ist proportional zum Partikel-Radius R hoch Dₘ.

Vorzugsweise weist die Kieselsäure eine Dichte an Oberflächen-Silanolgruppen SiOH von kleiner als 2,5 SiOH / nm², vorzugsweise kleiner 2,1 SiOH / nm², bevorzugt von kleiner als 1,9 SiOH / nm², besonders bevorzugt von 1,7 bis 1,9 SiOH / nm² auf.

Es können bei hoher Temperatur (über 1000 °C) hergestellte Kieselsäuren eingesetzt werden. Besonders bevorzugt sind pyrogen hergestellte Kieselsäuren. Es können auch hydrophile Kieselsäuren eingesetzt werden, die frisch hergestellt direkt aus dem Brenner kommen, zwischengelagert oder bereits handelsüblich verpackt sind. Es können auch hydrophobierte oder silylierte Kieselsäuren, z.B. handelsübliche, eingesetzt werden.

Es können unverdichtete, mit Schüttdichten kleiner 60 g/l, aber auch verdichtete, mit Schüttdichten größer 60 g/l, Kieselsäuren eingesetzt werden.

Es können Gemische aus verschiedenen Kieselsäuren eingesetzt werden, so z.B. Mischungen aus Kieselsäuren unterschiedlicher BET-Oberfläche oder Mischungen aus Kieselsäuren mit unterschiedlichem Hydrophobier- oder Silyliergrad.
- Die Oberflächenmodifizierung mit Bor kann als diskontinuierliche Reaktion, d.h. im Batch-Verfahren oder als kontinuierliche Reaktion durchgeführt werden. Aus technischen Gründen bevorzugt ist eine kontinuierliche Reaktion.
- Die Reaktion kann in einem Schritt realisiert werden oder in 2 oder 3 aufeinanderfolgenden Schritten. Das heißt, der Reaktion kann eine Beladung (Physisorption der Borverbindung) vorgeschaltet sowie der Reaktion ein Reinigungsschritt nachgeschaltet sein. Bevorzugt sind 3 suksessive Schritte: (1) Beladung - (2) Reaktion - (3) Reinigung.
- Die Beladungstemperatur liegt bei vorzugsweise -30°C bis 350°C, bevorzugt 20°C bis 150°C, besonders bevorzugt 60°C - 120 °C.
- Die Reaktionstemperaturen reichen vorzugsweise von 50 bis 400 °C, bevorzugt 50°C bis 150°C.
- Die Reaktionszeiten dauern von vorzugsweise 1 Min bis 24 h, bevorzugt 10 Min bis 8 h, besonders bevorzugt 30 Min bis 4 h.
- Der Reaktionsdruck im Bereich Normaldruck, Überdruck bis 10 bar, Unterdruck bis 0,2 bar ist möglich.
- Die Reinigungstemperatur reicht vorzugsweise von 100 bis 400 °C, bevorzugt 150°C bis 300°C.
- Eine effektive Bewegung und Durchmischung von KIESELSÄURE und Borverbindung ist notwendig. Dies erfolgt bevorzugt durch mechanische oder gasgetragene Fluidisierung. Eine gasgetragene Fluidisierung kann durch alle inerten Gase erfolgen, die nicht mit der Borverbindung, der KIESELSÄURE, der Bor-belegten KIESELSÄURE und Nebenreaktionsprodukten reagieren, also nicht zu Nebenreaktionen, Abbaureaktionen, Oxidationsvorgängen und Flammen- und Explosionserscheinungen führen: wie N₂, Ar, andere Edelgase, CO₂, etc. Die Zuführung der Gase zur Fluidisierung erfolgt bevorzugt im Bereich von Leerrohrgasgeschwindigkeiten von 0,05 bis 5 cm/s, besonders bevorzugt von 0,05-1 cm/s. Mechanische Fluidisierung kann durch Flügelrührer, Ankerrührer, und sonstige geeignete Rührorgane erfolgen.
- In einer besonders bevorzugten Ausführung wird nur die Gasmenge zugeführt, die zur Aufrechterhaltung einer sauerstoffarmen Atmosphäre, bevorzugt weniger als 10 Vol.%, besonders bevorzugt weniger als 2,5 Vol% Sauerstoff, ausreicht, und die Fluidisierung erfolgt dann rein mechanisch.
- Die Reaktion wird bevorzugt in einer Atmosphäre durchgeführt, die nicht zur Oxidation der Bor-belegten KIESELSÄURE führt, d.h. sauerstoffarme Atmosphäre, bevorzugt weniger als 10 Vol.% Sauerstoff, besonders bevorzugt sind weniger als 2,5 Vol.%, wobei beste Ergebnisse bei weniger als 1 Vol.% Sauerstoff erzielt werden.
- Es erfolgt ein effektives Einbringen der Borverbindung in die KIESELSÄURE. Dies kann durch Einsatz einer bei Belegungs- oder Reaktionstemperatur dampfförmigen Borverbindung geschehen. Handelt es sich bei der Borverbindung bei Raumtemperatur und/oder bei Reaktionstemperatur um eine flüssige Verbindung oder um eine feste Verbindung, die in einem Lösemittel gelöst werden muss, so werden bevorzugt effektive Verdüsungstechniken eingesetzt, wie Verdüsen in 1-Stoffdüsen unter Druck (5 bis 20 bar), Versprühen in 2-Stoffdüsen unter Druck (Gas und Flüssigkeit 2-20 bar), Feinstverteilen mit Atomizern.
- Bevorzugt wird die Borverbindung als feinstverteiltes Aerosol zugefügt, **dadurch gekennzeichnet, dass** das Aerosol eine Sinkgeschwindigkeit von vorzugsweise 0,1 - 20 cm/s aufweist.
- Wahlweise können vorzugsweise protische Lösemittel hinzugefügt werden, wie flüssige oder verdampfbare Alkohole oder Wasser; typische Alkohole sind iso-Propanol, Ethanol und Methanol. Es können auch Gemische der oben genannten protischen Lösemittel zugefügt werden. Bevorzugt wird Wasser zugefügt. Bevorzugt wird Wasser in Mengen 0,1 bis 50 Gew.% bezogen auf die Kieselsäure zugesetzt, besonders bevorzugt ist eine Gesamt-Menge an Wasser oder Feuchte, zu bestimmen durch Auswaage der Gewichtsdifferenz vor und nach Ausheizen bei einer Temperatur von 105°C und Normaldruck für 2 Stunden, von 0,25 Gew.% bis 2,5 Gew.% bezogen auf eine Kieselsäure mit einer spezifischen Oberfläche nach BET von 100 m²/g, d.h zu einer Kieselsäure mit einer spezifischen Oberfläche von 100 m²/g nach BET 0,25 bis 2,5 Gew.%, entsprechend weniger zu einer Kieselsäure mit einer spezifischen Oberfläche von 50 m²/g nach BET 0,125 bis 1,25 Gew.%, entsprechend mehr zu einer Kieselsäure mit einer spezifischen Oberfläche von 300 m²/g nach BET 0,75 bis 7,5 Gew.%.
- Wahlweise können vorzugsweise saure oder basische Katalysatoren zugesetzt werden. Diese können basischen Charakters sein, im Sinne einer Lewis Base oder einer Bronsted Base, wie Ammoniak, oder sauren Charakters sein, im Sinne einer Lewis Säure oder einer Brönsted Säure, wie Chlorwasserstoff. Bevorzugt werden diese in Spuren zugesetzt, d.h weniger als 1000 ppm. Besonders bevorzugt werden keine Katalysatoren zugesetzt.
- Der Reinigungsschritt ist durch Bewegung gekennzeichnet, wobei langsame Bewegung und geringes Durchmischen bevorzugt sind.
- Der Reinigungsschritt ist weiterhin durch erhöhten Gaseintrag gekennzeichnet, entsprechend einer Leerrohrgasgeschwindigkeit von 0,001 bis 10 cm/s, bevorzugt von 0,01 bis 1 cm/s.
- Zusätzlich kann der Reinigungsschritt ein Mischen mit mechanischen Rührorganen beinhalten. Die Rührorgane werden dabei so eingestellt und bewegt, dass bevorzugt Mischen und Fluidisieren, jedoch nicht völlige Verwirbelung eintritt.
- Zusätzlich können während der Zugabe der Borverbindung Verfahren zur mechanischen Verdichtung eingesetzt werden, wie zum Beispiel Presswalzen, Kugelmühlen, Kollergänge, Schraubenverdichter, oder Brikettierer.
- Zusätzlich können während der Zugabe der Borverbindung Verfahren zur Desagglomerierung der Kieselsäure eingesetzt werden, wie Stiftmühlen oder Vorrichtungen zur Mahlsichtung.
- Zusätzlich können im Anschluss an die Reinigungsverfahren Verfahren zur mechanischen Verdichtung der Kieselsäure eingesetzt werden, wie zum Beispiel Presswalzen oder Verdichten durch Absaugen des Luft- oder Gasinhaltes durch geeignete Vakuummethoden, oder andere Verfahren zur mechanischen Verdichtung, wie zum Beispiel Presswalzen, Kugelmühlen, kollergänge, Schraubenverdichter oder Brikettierer.
- Zusätzlich können im Anschluß an die Reinigung Verfahren zur Desagglomerierung der Kieselsäure eingesetzt werden, wie Stiftmühlen oder Vorrichtungen zur Mahlsichtung.
- In einer bevorzugten Ausführung werden die nicht abreagierte Borverbindung, Nebenreaktionsprodukte, nicht chemisch fixierte und gegebenenfalls veränderte Überschüsse der zugegebenen Borverbindung, Abreinigungsprodukte und Abgase aus dem Reinigungsschritt in geeignet temperierten Vorrichtungen wieder in den Schritt der Belegung und Beladung der Kieselsäure zurückgeführt; dies kann teilweise oder vollständig geschehen, bevorzugt zu 50-90% des gesamten Volumenstromes der aus der Abreinigung austretenden Gasvolumina.

Das Verhältnis Bor in der Bor-haltigen Kieselsäure entspricht dabei vorzugsweise einer Menge von 0,0001 Gew.% bis 12 Gew.% Bor, bevorzugt 0,001 bis 10 Gew.%, besonders bevorzugt 0,1 - 5 Gew%, ganz besonders bevorzugt 0,5 - 2,5 Gew.% Bor, wobei Bor immer als reines Bor in der Bor-haltigen Kieselsäure berechnet wird, bezogen auf die gesamte Bor-haltige Kieselsäure.

Ein weiterer Gegenstand ist eine Kieselsäure, die Bor enthält, an der Oberfläche oder eingebaut in das gesamte Volumen der Kieselsäure, und die eine mittlere Primärteilchen-Partikelgröße kleiner als 100 nm, bevorzugt eine mittlere Primärteilchen-Partikelgröße von 5 bis 50 nm, aufweist, wobei diese Primärteilchen nicht isoliert in der Kieselsäure existieren, sondern Bestandteile größerer Aggregate (Definition nach DIN 53206) sind, die einen Durchmesser von 100 bis 1000 nm aufweisen und Agglomerate (Definition nach DIN 53206) aufbauen, die in Abhängigkeit von der äußeren Scherbelastung Größen von 1 bis 500 µm aufweisen, eine spezifische Oberfläche von 10 bis 500 m²/g (gemessen nach der BET Methode nach DIN 66131 und 66132) und eine fraktale Dimension der Masse Dₘ von kleiner oder gleich als 2,8 aufweisen und einen Borgehalt von vorzugsweise 0,0001 Gew.% bis 12 Gew.% Bor, bevorzugt 0,001 bis 10 Gew.%, besonders bevorzugt 0,1 - 5 Gew%, ganz besonders bevorzugt 0,5 - 2,5 Gew.% Bor aufweisen, wobei Bor immer als reines Bor in der Bor-haltigen Kieselsäure berechnet wird, bezogen auf die gesamte Bor-haltige Kieselsäure.

Die erfindungsgemäße Bor-haltige KIESELSÄURE ist im weiteren dadurch gekennzeichnet, dass sich mit ihr wässrige Dispersionen mit hohem Feststoffgehalt herstellen lassen bei hoher Lagerstabilität der Viskosität, frei von Sedimentation und ohne Vergelung.

Die Erfindung betrifft den Einsatz der erfindungsgemäßen Bor-haltigen KIESELSÄURE in pulverförmigen Feststoffen zur Verbesserung der Fließfähigkeit des trockenen Pulvers, d.h. zur Verbesserung der Rieselfähigkeit, d.h. den Einsatz als Rieselhilfe; im Weiteren zur Unterdrückung des Verklumpens und Verbackens von Pulvern, zur Unterdrückung des Verklebens und Blockierens von Folien.

Ein weiterer Gegenstand der Erfindung ist ein Druckmedium (recording medium), z.B. ein Papier oder eine Folie, geeignet zum Bedrucken mit Tintenstrahldruckern (Ink Jet Printer), im besonderen ein Papier mit hohem Glanz, dadurch gekennzeichnet, dass es eine erfindungsgemäße Dispersion aufweist.

Die Erfindung betrifft den Einsatz der erfindungsgemäßen Bor-haltigen KIESELSÄURE und den damit hergestellten Bor-haltigen Kieselsäure-haltigen wässrigen Dispersionen bei der Beschichtung von Oberflächen, wie mineralische Substrate, wie Metalle, z.B. Stahl oder Eisen, z.B. mit dem Ziel des Korrosionsschutzes.

Die Erfindung betrifft den Einsatz der erfindungsgemäßen Bor-haltigen KIESELSÄURE und den damit hergestellten Bor-haltigen Kieselsäure-haltigen wässrigen Dispersionen bei der Herstellung von Farben und Lacken, Kunstharzen, Klebstoffen und Dichtstoffen, insbesondere solchen, die auf wässriger Basis hergestellt sind.

Die Erfindung betrifft den Einsatz der erfindungsgemäßen Bor-haltigen KIESELSÄURE und den damit hergestellten Bor-haltigen Kieselsäure-haltigen wässrigen Dispersionen bei der Beschichtung von Druckmedien, insbesondere solchen Papieren die, bei berührungsfreien Druckverfahren eingesetzt werden.
Beispiele sind Papiere für Ink Jet Printer und im Besonderen solche Papiere mit hohem Glanz.

### Beispiele

### Beispiel 1

10,0 kg/h Siliciumtetrachlorid und 0,8 kg/h Bortrichlorid werden in einer Mischkammer homogen mit 74,3 Nm³/h Primärluft und.20,7 Nm³/h Wasserstoffgas vermischt und in einer Brennerdüse bekannter Bauart in einer Flamme in eine Brennkammer geleitet. In die Brennkammer werden zusätzlich 12,0 Nm³/h Sekundärluft eingeblasen. Nach Austritt aus der Brennkammer wird das entstandene Kieselsäure-Gasgemisch in einem Wärmetauschersystem auf 120-150°C abgekühlt, und anschließend wird der Feststoff Kieselsäure von der Chlorwasserstoff-haltigen Gasphase in einem beheizen Filtersystem getrennt. Bei erhöhter Temperatur werden anschließend Reste von Chlorwasserstoff entfernt. Es wird eine Bor-haltige pyrogene Kieselsäure mit einer spezifischen Oberfläche, gemessen nach der BET Methode nach DIN 66131 und 66132 von 180 m²/g, erhalten, mit einem pH-Wert der 4%igen (Gew%) Dispersion (DIN/ISO 787/9) von 4. Der Borgehalt der Kieselsäure ist 1,8 Gew.%

### Beispiel 2

5,0 kg/h Siliciumtetrachlorid werden in einer Mischkammer homogen mit 74,3 Nm³/h Primärluft und 20,7 Nm³/h Wasserstoffgas vermischt und in einer Brennerdüse bekannter Bauart in einer Flamme in eine Brennkammer geleitet. In die Brennkammer werden zusätzlich 12,0 Nm³/h Sekundärluft eingeblasen. In die Brennkammer werden zusätzlich 0,2 kg/h Natriumborat gelöst in 1 kg/h Wasser als Aerosol eingedüst. Nach Austritt aus der Brennkammer wird das entstandene Kieselsäure-Gasgemisch in einem Wärmetauschersystem auf 120-150°C abgekühlt, und anschließend wird der Feststoff Kieselsäure von der Chlorwasserstoff-haltigen Gasphase in einem beheizten Filtersystem getrennt. Bei erhöhter Temperatur werden anschließend Reste von Chlorwasserstoff entfernt. Es wird eine Bor-haltige pyrogene Kieselsäure mit einer spezifischen Oberfläche, gemessen nach der BET Methode nach DIN 66131 und 66132 von 110 m²/g, erhalten, mit einem pH-Wert der 4%igen (Gew%) Dispersion (DIN/ISO 787/9) von 6. Der Borgehalt der Kieselsäure ist 0,8 Gew.%.

### Beispiel 3

In einer kontinuierlichen Apparatur werden bei einer Temperatur von 25 °C unter Inertgas N₂ zu einem Massestrom von 1000 g/h an hydrophiler KIESELSÄURE, mit einer spezifischen Oberfläche von 300 m²/g (gemessen nach der BET Methode nach DIN 66131 und 66132) (erhältlich unter dem Namen WACKER HDK T30 bei Wacker-Chemie GmbH, Burghausen, D), die auf einen Wassergehalt von 2,5 Gew.% Wasser angefeuchtet wurde, 200 g/h Borsäuretrimethylester in flüssiger, feinstverteilter Form durch Verdüsen überein Einstoffdüse (Druck 10 bar) zugefügt. Die so beladene KIESELSÄURE wird bei 100 °C während einer Verweilzeit von 1 h getempert, und sie wird anschließend bei einer Verweilzeit von 2 Stunden bei einer Temperatur von 250 °C zur Reaktion gebracht. Anschließend wird unter mechanischem Rühren und Durchführen von N₂ mit weniger als 0,5 cm/s Gasgeschwindigkeit gereinigt bei einer Temperatur von 150 °C und während 30 Min. Erhalten wird ein weißes KIESELSÄURE-Pulver mit 1,8 Gew.% Bor.

### Beispiel 4

In einer diskontinuierlichen Apparatur werden bei einer Temperatur von 25 °C unter Inertgas N₂ zu 100 g hydrophiler KIESELSÄURE mit einer spezifischen Oberfläche von 50 m²/g (gemessen nach der BET Methode nach DIN 66131 und 66132) (erhältlich unter dem Namen WACKER HDK D05 bei Wacker-Chemie GmbH, Burghausen, D), die auf einen Wassergehalt von 0,6 Gew% Wasser angefeuchtet wurde, 50 g Borsäuretrimethylester in flüssiger, feinstverteilter Form durch Verdüsen über eine Einstoffdüse (Druck 20 bar) zugefügt. Die so beladene KIESELSÄURE wird bei 100 °C während insgesamt 3 h getempert und wird anschließend bei einer Verweilzeit von 2 Stunden bei einer Temperatur von 250 °C in einem Reaktor zur Reaktion gebracht, unter Zuleitung von N₂ unter 15-fachem Gasaustausch während der Reaktionszeit. Erhalten wird ein weißes KIESELSÄURE-Pulver mit einem Borgehalt von 4,1 Gew.%.

### Beispiel 5

In einer diskontinuierlichen Apparatur werden bei einer Temperatur von 25 °C zu 700 ml Wasser 300 g Bor-haltige KIESELSÄURE aus Beispiel 3 in kleinen Schritten zugefügt und dabei mit einer Rotor-Stator-Dispergiereinheit, einem Ultraturax der Firma Jahnke und Kunkel, dispergiert. Es entsteht eine dünnflüssige weißliche wässrige Suspension mit einem Borgehalt von 0,5 Gew.%. Die Suspension ist für mehr als ein halbes Jahr stabil gegen Sedimentation und Vergelen. Die Suspension zeigt bei einem Schergefälle 100 1/s, gemessen bei 25°C und einem Kegelplatte-Rotationsviskosimeter der Fa. Haake, RheoStress 600, eine Viskosität von 120 mPas.

Die Stabilität gegen Sedimentation wird dokumentiert durch Messung mit der durch optische Transmission kontrollierten Zentrifuge, Gerät Luminofuge^{®}.

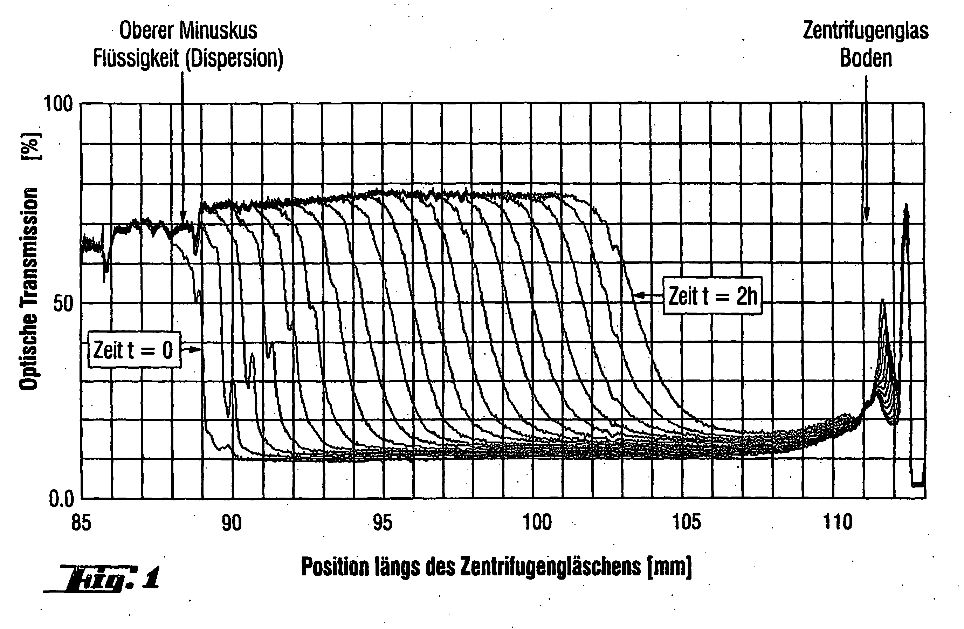

### Siehe Figur 1 (nicht erfindungsgemäße Referenz):

Laserlicht-Transmissionsprofil aufgenommen mit der Lumifuge^{®} (hierbei wird Sedimentation erzeugt durch Zentrifugieren mit einer Rotation entsprechend 3000 G; mittels eines Arrays von 2000 Dioden wird während des Zentrifuguierens die Sedimentation der Kieselsäure verfolgt über Laser-Licht-Transmission).

Abszisse (X-Achse): Längsachse des Zentrifugengläschens in mm (links: Öffnung, rechts: Boden); Ordinate (Y-Achse):
Transmission Licht in Prozent (%).
Transmissionsprofil, aufgenommen mit der Lumifuge^{®}, einer nicht erfindungsgemäßen Dispersion; Monodisperse Silica-Kugeln 220nm, Messdauer 120 min, Gravitationsfeld 3000 G: es ist die starke Sedimentation einer nicht-stabilen Dispersion zu beobachten.

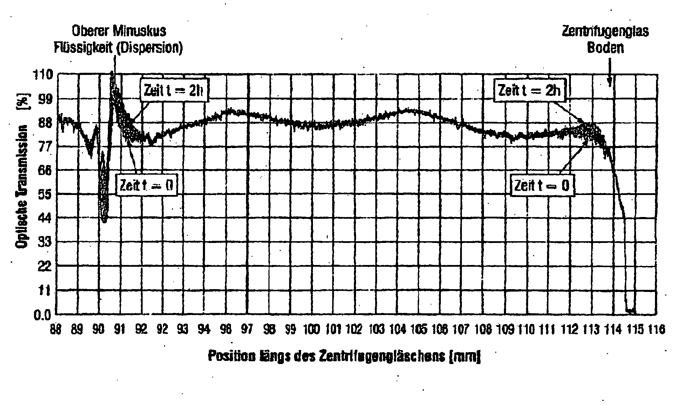

### und Figur 2 (erfindungsgemäßes Beispiel 5):

Laserlicht-Transmissionsprofil aufgenommen mit der Lumifuge^{®} (hierbei wird Sedimentation erzeugt durch Zentrifugieren mit einer Rotation entsprechend 3000 G; mittels eines Arrays von 2000 Dioden wird während des Zentrifuguierens die Sedimentation der Kieselsäure verfolgt über Laser-Licht-Transmission). Abszisse (X-Achse): Längsachse des Zentrifugengläschens (links: Öffnung, rechts: Boden);
Ordinate (Y-Achse): Transmission Licht in Prozent (%). Transmissionsprofil, aufgenommen mit der Lumifuge^{®}, einer erfindungsgemäßen Dispersion nach Beispiel 5; Messdauer 120 min, Gravitationsfeld 3000 G: es ist keine Sedimentation zu beobachten.

### Beispiel 6

In einer diskontinuierlichen Apparatur werden bei einer Temperatur von 25 °C zu 750 ml Wasser 250 g Bor-haltige KIESELSÄURE aus Beispiel 3 in kleinen Schritten zugefügt und dabei mit einer Zahnscheiben-Dissolver der Fa. Ika bei 11,6 m/s Umlaufgeschwindigkeit dispergiert. Es entsteht eine dünnflüssige weißliche wässrige Suspension mit einem Borgehalt von 0,5 Gew.%. Die Suspension ist für mehr als ein Jahr stabil gegen Sedimentation und Vergelen. Die Suspension zeigt bei einem Schergefälle 100 1/s, gemessen bei 25°C und einem Kegelplatte-Rotationsviskosimeter der Fa. Haake, RheoStress 600, eine Viskosität von 130 mPas.

### Beispiel 7

In einer diskontinuierlichen Apparatur werden bei einer Temperatur von 25 °C zu 2000 ml Wasser 2000 g Bor-haltige KIESELSÄURE aus Beispiel 4 in kleinen Schritten zugefügt und dabei mit einer Rotor-Stator Dispergiereinheit, einem 6 1 Unimix der Fa. Unimix / Ekator, dispergiert. Es entsteht eine dünnflüssige weißliche wässrige Suspension mit einem Borgehalt von 2 Gew.%. Die Suspension ist für mehr als ein Jahr stabil gegen Sedimentation und Vergelen. Die Suspension zeigt bei einem Schergefälle 100 1/s, gemessen bei 25°C und einem Kegelplatte Rotationsviskosimeter der Fa. Haake, RheoStress 600, eine Viskosität von 190 mPas.

### Beispiel 8

100 g der Dispersion aus Beispiel 5, enthaltend 30 g Kieselsäure aus Beispiel 3, werden mit 8 g Polyvinylalkohol gelöst in 50 g Wasser versetzt und vermischt. Die so hergestellte Ink-Jet Streichfarbe wird mit einem Rakel manuell auf ein unbeschichtetes Papier mit 77,5 g/m² Papiergewicht aufgetragen, das beschichtete Papier wird an Luft bis zur Handtrockene getrocknet. Das getrocknete Papier wird kalendriert und mit einem Epson^{®} Stylus pro Photorealistic bedruckt. Die Bildqualität ist exzellent. Der Glanz des Drucks wurde mit einem Gardener 60° Micro-Gloss Meter bestimmt zu 47.

### Beispiel 9

100 g der Dispersion aus Beispiel 5, enthaltend 30 g Kieselsäure aus Beispiel 3, werden mit 8 g Polyvinylalkohol (Mowiol 26-88, Fa. Clariant) gelöst in 50 g Wasser versetzt und vermischt. Die so hergestellte Ink-Jet Streichfarbe wird mit einem Rakel manuell auf eine Polyesterfolie von 0,2 mm Dicke aufgetragen, mit einer Nassfilmdicke von 160 µm, die beschichtete Folie wird bei 105°C für 15 Min getrocknet. Die beschichtete Folie wird mit einem Epson^{®} Stylus Colour 800 bedruckt. Die Bildqualität ist exzellent.

### Beispiel 10

In einer diskontinuierlichen Apparatur werden bei einer Temperatur von 25 °C zu 750 ml Wasser und 25 g Borsäure 250 g KIESELSÄURE mit einer BET Oberfläche von 300 m²/g (erhältlich bei Wacker-Chemie GmbH unter dem Namen Wacker HDK T30) in kleinen Schritten zugefügt und dabei mit einer Rotor-Stator Dispergiereinheit, einem Ultraturax der Firma Jahnke und Kunkel, bei 11000 UpM dispergiert. Es entsteht eine dünnflüssige weißliche wässrige Suspension mit einem Borgehalt von 0,8 Gew.%. Die Suspension ist für mehr als ein halbes Jahr stabil gegen Sedimentation und Vergelen. Die Suspension zeigt bei einem Schergefälle 100 1/s, gemessen bei 25°C und einem Kegelplatte Rotationsviskosimeter der Fa. Haake, RheoStress 600, eine Viskosität von 120 mPas.

### Beispiel 11

100 g der Dispersion aus Beispiel 10 werden mit 8 g Polyvinylalkohol gelöst in 50 g Wasser versetzt und vermischt. Die so hergestellte Ink-Jet Streichfarbe wird mit einem Rakel manuell auf ein unbeschichtetes Papier mit 77,5 g/m² Papiergewicht aufgetragen, das beschichtete Papier wird an Luft bis zur Handtrockene getrocknet. Das getrocknete Papier wird kalendriert und mit einem Epson^{®} Stylus pro Photorealistic bedruckt. Die Bildqualität ist exzellent. Der Glanz des Drucks wurde mit einem Gardener 60° Micro-Gloss Meter bestimmt zu 47.

### Beispiel 12

100 g der Dispersion aus Beispiel 10 werden mit 8 g Polyvinylalkohol (Mowiol 26-88, Fa. Clariant) gelöst in 50 g Wasser versetzt und vermischt. Die so hergestellte Ink-Jet Streichfarbe wird mit einem Rakel manuell auf eine Polyesterfolie von 0,2 mm Dicke aufgetragen, mit einer Nassfilmdicke von 160 µm, die beschichtete Folie wird bei 105°C für 15 Min getrocknet. Die beschichtete Folie wird mit einem Epson^{®} Stylus Colour 800 bedruckt. Die Bildqualität ist exzellent.

## Patentansprüche

1. Verfahren zur Stabilisierung von Dispersionen, **dadurch gekennzeichnet, dass** Kieselsäure eingemischt wird, die Bor enthält.

2. Verfahren zur Stabilisierung von Dispersionen nach Anspruch 1, **dadurch gekennzeichnet, dass** Kieselsäure eingemischt wird, in der Bor in einer Menge von 0,0001 Gew.% bis 12 Gew.% Bor enthalten ist.

3. Dispersion, **dadurch gekennzeichnet, dass** sie Bor-haltige Kieselsäure enthält.

4. Dispersion nach Anspruch 3, **dadurch gekennzeichnet, dass** die Kieselsäure Bor in einer Menge von 0,0001 Gew.% bis 12 Gew.%, bezogen auf die gesamte Bor-haltige Kieselsäure, enthält.

5. Kieselsäure **dadurch gekennzeichnet, dass** sie zumindest mit einer Borverbindung beschichtet ist.

6. Kieselsäure nach Anspruch 5, **dadurch gekennzeichnet, dass** die Kieselsäure, die Bor enthält, einen mittleren Primärteilchen-Partikelgröße kleiner als 100 nm aufweist, wobei diese Primärteilchen nicht isoliert in der Kieselsäure existieren, sondern Bestandteile größerer Aggregate (Definition nach DIN 53206) sind, die einen Durchmessern von 100 bis 1000 nm aufweisen und Agglomerate (Definition nach DIN 53206) aufbauen, die in Abhängigkeit von der äußeren Scherbelastung Größen von 1 bis 500 µm aufweisen, eine spezifischen Oberfläche von 10 bis 500 m²/g (gemessen nach der BET Methode nach DIN 66131 und 66132) und eine fraktale Dimension der Masse Dₘ von kleiner oder gleich als 2,8 und einen Borgehalt von mindestens 0,0001 Gew.% aufweist.

7. Verfahren zum Modifizieren von Kieselsäure, **dadurch gekennzeichnet, dass** die Kieselsäure mit einer oder mehreren flüchtigen, flüssigen oder löslichen Borverbindungen oberflächenbehandelt wird.

8. Verfahren zum Modifizieren von Kieselsäure, **dadurch gekennzeichnet, dass** während der Herstellung der pyrogenen Kieselsäure in einer Flamme eine oder mehrere flüssige oder in einem Lösemittel gelösten Borverbindungen in die Flamme gesprüht werden.

9. Druckmedium, **dadurch gekennzeichnet, dass** es eine Dispersion nach den Ansprüchen 3 und 4 aufweist.

10. Druckmedium nach Anspruch 9, **dadurch gekennzeichnet, dass** es ein Glanz oder Hochglanzpapier ist, das für das Bedrucken mit Tintenstrahldruckern geeignet ist.

11. Druckmedium nach Anspruch 9, **dadurch gekennzeichnet, dass** es eine Folie geeignet ist, die für das Bedrucken mit Tintenstrahldruckern geeignet ist.

12. Oberflächenbeschichtung, **dadurch gekennzeichnet, dass** sie eine Dispersion nach den Ansprüchen 3 und 4 aufweist.

## Claims

1. Method for stabilizing dispersions, **characterized in that** silica which contains boron is mixed in.

2. Method for stabilizing dispersions according to claim 1, **characterized in that** silica is mixed in in which boron contained in an amount of from 0.0001% by weight to 12% by weight.

3. Dispersion, **characterized in that** it contains boron-containing silica.

4. Dispersion according to claim 3, **characterized in that** the silica contains boron in an amount of from 0.0001% by weight to 12% by weight, based on the total boron-containing silica.

5. Silica, **characterized in that** it is coated at least with one boron compound.

6. Silica according to claim 5, **characterized in that** the silica which contains boron has a mean primary particle size of less than 100 nm, these primary particles not existing in isolated form in the silica but being components of larger aggregates (definition according to DIN 53206) which have a diameter of from 100 to 1000 nm and form agglomerates (definition according to DIN 53206) which, depending on the external shear load, have sizes of from 1 to 500 µm, and have a specific surface area of from 10 to 500 m²/g (measured by the BET method according to DIN 66131 and 66132) and a fractal dimension of the mass Dₘ of less than or equal to 2.8 and a boron content of at least 0.0001% by weight.

7. Method for modifying silica, **characterized in that** the silica is surface-treated with one or more volatile, liquid or soluble, one or more, boron compounds.

8. Method for modifying silica, **characterized in that,** during the preparation of the pyrogenic silica in a flame, one or more liquid boron compounds or boron compounds dissolved in a solvent are sprayed into the flame.

9. Recording medium, **characterized in that** it comprises a dispersion according to claim 3 and 4.

10. Recording medium according to claim 8, **characterized in that** it is a glazed or high-gloss paper which is suitable for printing on by means of inkjet printers.

11. Recording medium according to claim 8, **characterized in that** it is a film suitable which is suitable for printing on by means of inkjet printers.

12. Surface coating, **characterized in that** it comprises a dispersion according to claim 3 and 4.

## Revendications

1. Procédé de stabilisation de dispersions, **caractérisé en ce que** de la silice qui contient du bore incorporée.

2. Procédé de stabilisation de dispersions selon la revendication 1, **caractérisé en ce que** de la silice qui contient du bore en une quantité de 0,0001 % en poids à 12 % en poids de bore est incorporée.

3. Dispersion, **caractérisée en ce qu'**elle contient de la silice contenant du bore.

4. Dispersion selon la revendication 3, **caractérisée en ce que** la silice contient du bore en une quantité de 0,0001 % en poids à 12 % en poids par rapport à la totalité de la silice contenant du bore.

5. Silice, **caractérisée en ce qu'**elle est enduite au moins avec un composé de bore.

6. Silice selon la revendication 5, **caractérisée en ce que** la silice qui contient du bore présente une taille de particule primaire moyenne inférieure à 100 nm, ces particules primaires n'existant pas sous forme isolée dans la silice, mais étant plutôt des constituants d'agrégats (définition selon DIN 53206) de plus grande taille qui présentent un diamètre de 100 à 1 000 nm et forment des agglomérats (définition selon DIN 53206) qui présentent en fonction de la contrainte de cisaillement externe des tailles de 1 à 500 µm, une surface spécifique de 10 à 500 m²/g (mesurée selon la méthode BET selon DIN 66131 et 66132) et une dimension fractale de la masse Dₘ inférieure ou égale à 2,8 et une teneur en bore supérieure ou égale à 0,0001 % en poids.

7. Procédé de modification de silice, **caractérisé en ce que** la silice est soumise à un traitement de surface avec un ou plusieurs composés de bore un ou plusieurs volatils, liquides ou solubles.

8. Procédé de modification de silice, **caractérisé en ce que** pendant la fabrication de la silice pyrogénée dans une flamme, un ou plusieurs composés de bore liquides ou dissous dans un solvant sont pulvérisés dans la flamme.

9. Support d'impression, **caractérisé en ce qu'**il comprend une dispersion selon la revendication 3 et 4.

10. Support d'impression selon la revendication 8, **caractérisé en ce qu'**il s'agit d'un papier brillant ou hautement brillant qui est approprié pour l'impression avec des imprimantes jet d'encre.

11. Support d'impression selon la revendication 8, **caractérisé en ce qu'**il s'agit d'une feuille appropriée qui est appropriée pour l'impression avec des imprimantes jet d'encre.

12. Revêtement de surface, **caractérisé en ce qu'**il comprend une dispersion selon la revendication 3 et 4.
